Europäisches Patentamt

European Patent Office

Office européen des brevets

(19)

(11) **EP 1 515 522 A1**

(12) # DEMANDE DE BREVET EUROPEEN

(43) Date de publication:
   **16.03.2005 Bulletin 2005/11**

(51) Int Cl.$^7$: **H04L 29/08**

(21) Numéro de dépôt: **04292069.4**

(22) Date de dépôt: **20.08.2004**

(84) Etats contractants désignés:
   **AT BE BG CH CY CZ DE DK EE ES FI FR GB GR
   HU IE IT LI LU MC NL PL PT RO SE SI SK TR**
   Etats d'extension désignés:
   **AL HR LT LV MK**

(30) Priorité: **09.09.2003 FR 0310618**

(71) Demandeur: **FRANCE TELECOM
   75015 Paris (FR)**

(72) Inventeurs:
   • **Goutard, Cédric
     14440 Douvres la Delivrande (FR)**
   • **Daridan, Olivier
     14210 Cheux (FR)**
   • **Saillard, Nicolas
     14123 Ifs (FR)**

(74) Mandataire: **Fréchède, Michel
   Cabinet Lavoix
   2 Place d'Estienne d'Orves
   75441 Paris Cedex 09 (FR)**

(54) **Procédé d'insertion d'informations de filtrage thématique de pages HTML et système correspondant**

(57)  L'invention concerne un procédé et un système d'insertion d'informations de filtrage thématique d'objets, accessibles sur un site INTERNET hébergé par un serveur (SE$_j$) par un poste client (PC$_i$).

On intercepte (A) la requête d'accès (Req) pour mémoriser au moins un paramètre de transaction de cette requête, on transfère (B) cette requête au serveur (SE$_j$) et sur réponse (Rep) contenant au moins un objet de ce site, on intercepte (C) la réponse (Rep) et on sélectionne dans au moins un objet au moins un objet informatique porteur d'information, on effectue (D) une analyse thématique pour engendrer un ensemble de paramètres (PT) caractéristiques du site, on insère (E) des informations de catégorisation IC (PT) codées dans l'entête de la réponse du serveur WEB et/ou l'objet lui-même, on transfère (F) la réponse contenant les informations de catégorisation au poste client (PC$_i$). Ceci permet d'effectuer un contrôle d'accès aux informations des objets au niveau du poste client (PCI).

Application à la diffusion d'objets tels que des pages HTML sur INTERNET.

FIG.1

## Description

L'accès banalisé au réseau INTERNET permet, à l'heure actuelle, d'échanger un très grand nombre d'informations de toute nature, par accès aux pages HTML ou objets délivrées à partir de tout site INTERNET. Parmi ces informations, certaines de celles-ci peuvent présenter pour la personne de l'internaute utilisateur, un caractère violent, pornographique, pédophile, illégal, tendancieux, subversif ou simplement sans intérêt.

En conséquence, des techniques de filtrage du contenu des objets accessibles sont actuellement disponibles dans le commerce, dans le but, notamment, de protéger les internautes utilisateurs mineurs contre l'accès à de tels contenus.

Parmi les techniques de filtrage précitées, on peut citer celles mises en oeuvre par :

- des logiciels installés sur le poste client s'appuyant sur des listes d'U R L régulièrement mises à jour par téléchargement ;
- des logiciels installés sur le poste client s'appuyant sur des moteurs d'analyse thématique ;
- des logiciels installés sur le poste client s'appuyant sur des informations de catégorisation incluses par les fournisseurs de contenu dans les pages HTML accédées, informations telles que les étiquettes ou "labels" éditées conformément à la norme P I C S, notamment ;
- des solutions de filtrage en coeur de réseau s'appuyant sur des équipements de type "proxy" et sur des listes d' U R L régulièrement mises à jour ;
- des solutions de filtrage en coeur de réseau s'appuyant sur des équipements de type "proxy" et sur des moteurs d'analyse thématique.

On rappelle que les sigles

HTML : (HyperText Mark-up Language) désigne un langage de marquage utilisé pour spécifier la mise en forme des documents dans le World-Wide Web ;

URL : (Uniform Resource Locator) est la syntaxe utilisée dans le World-Wide Web pour spécifier la localisation physique d'un fichier ou d'une ressource sur INTERNET ;

PICS : (Platform for INTERNET Content Selection) désigne une norme d'éditions d'étiquettes.

On rappelle que la notion de coeur de réseau recouvre tout équipement du réseau autre que le poste client et le serveur d'hébergement du site INTERNET accédé et que celle d'équipement de type "proxy" recouvre celle de tout logiciel ou matériel, éventuellement équipé d'un tel logiciel de sécurité servant d'intermédiaire entre le navigateur d'un poste client en réseau local et le serveur WEB hébergeant le site INTERNET que l'utilisateur de ce poste client veut consulter.

La première catégorie de solutions, exécutant un filtrage sur le poste client, se caractérise essentiellement par l'installation d'éléments sur le poste client et la configuration de ce dernier.

La seconde catégorie de solutions se caractérise, au contraire, par l'absence d'installation d'éléments sur le poste client et par une configuration minimale pour utiliser la solution de filtrage en coeur de réseau.

Les deux catégories de solutions précitées n'offrent pas totalement satisfaction, pour les raisons ci-après :

- les solutions de la première catégorie ont pour conséquence une surcharge d'administration et d'exploitation, installation et mise à jour régulière de filtres ou de moteur d'analyse de contenu et coût d'accès en réseau pour effectuer le téléchargement des filtres ou moteurs d'analyse du contenu. Parmi les solutions de la première catégorie précitée, celles qui font usage de la catégorisation selon la norme PICS, laquelle épargne l'installation d'un logiciel sur le poste client grâce à l'interprétation par le navigateur des étiquettes ou "labels" incluses dans les objets accédés, présentent à l'heure actuelle un intérêt restreint, en raison du nombre réduit de sites INTERNET faisant usage d'une telle catégorisation.
- les solutions de la deuxième catégorie sont des solutions partagées entre plusieurs internautes utilisateurs et ne permettent pas, pour cette raison, une personnalisation fine des types ou de la nature de filtrage appliqués.

La présente invention a pour objet de remédier aux inconvénients des solutions techniques antérieures, par la mise en oeuvre d'un procédé et d'un système d'insertion d'informations de filtrage thématique d'objets accessibles sur un site INTERNET permettant, en particulier, une très grande finesse d'utilisation et d'usage, les critères de filtrage final pouvant être laissés à l'initiative du seul internaute utilisateur de chaque poste client, ou de la personne ayant autorité sur ce dernier.

Un autre objet de la présente invention est la mise en oeuvre d'un procédé et d'un système d'insertion d'informations de filtrage thématique d'objets accessibles sur un site INTERNET lesquels, bien que présentant la très grande finesse d'utilisation et d'usage précitée, ne nécessitent qu'une installation des plus légères au niveau de chaque poste client.

La notion d'objet accessible peut recouvrir aussi bien des pages entières au format HTML, XML ou autres, que les objets contenus dans ces pages : images, son, vidéos, etc...

Le procédé d'insertion d'informations de filtrage thématique d'objets accessibles, sur un site INTERNET hébergé par un serveur WEB, à partir d'un navigateur d'un poste client connecté au réseau IP, objet de la présente invention, est mis en oeuvre pour toute requête d'accès HTTP à ce serveur WEB émise à partir du poste client par l'intermédiaire de ce navigateur.

Il est remarquable en ce qu'il consiste, au niveau du coeur de réseau, à intercepter la requête d'accès pour mémoriser au moins un paramètre de transaction de cette requête d'accès HTTP à ce serveur WEB, transférer cette requête d'accès au serveur WEB, et, sur réponse de ce serveur WEB à cette requête d'accès comportant au moins un objet accessible sur ce site, intercepter cette réponse de ce serveur WEB à cette requête d'accès, sélectionner au moins un objet accessible sur ce site, effectuer une analyse thématique de cet au moins un objet, pour engendrer un ensemble de paramètres d'analyse thématique caractéristique de ce site INTERNET, insérer à partir de ces paramètres d'analyse thématique au moins une information de catégorisation codée dans l'en-tête HTTP de la réponse du serveur WEB et/ou dans l'objet lui-même, transférer la réponse du serveur WEB à la requête d'accès HTTP à ce serveur WEB avec une en-tête et/ou un corps de document contenant les informations de catégorisation au poste client. Ceci permet alors au poste client d'effectuer un contrôle d'accès aux informations contenues dans le ou les objets accessibles sur ce site.

Le système d'insertion d'informations de filtrage thématique d'objets, accessibles sur un site INTERNET hébergé par un serveur WEB, à partir d'un navigateur d'un poste client connecté au réseau IP, objet de la présente invention, est remarquable en ce qu'il comprend au moins au niveau du coeur de réseau, un module d'interception de contrôle et de redirection de toute requête d'accès HTTP à ce serveur WEB émise à partir de ce poste client par l'intermédiaire de ce navigateur et de la réponse de ce serveur WEB à cette requête, ce module d'interception, de contrôle et de redirection permettant au moins de sélectionner dans la réponse de ce serveur WEB au moins un objet accessible sur ce site INTERNET, un module d'analyse thématique interconnecté à ce module d'interception, de contrôle et de redirection recevant cet objet afin de l'enrichir au moyen de paramètres d'analyse thématique caractéristiques de ce site INTERNET ou de cet objet. Le module d'interception, de contrôle et de redirection permet la transmission de la réponse de ce serveur WEB enrichie des informations de catégorisation issues des paramètres d'analyse thématiques au poste client pour effectuer, au niveau de ce dernier, un contrôle d'accès aux informations contenues dans cet objet accessible sur ce site.

Le procédé et le système d'insertion d'informations de filtrage thématique d'objets accessibles sur un site INTERNET, objets de l'invention, trouvent application au contrôle d'accès à des informations sensibles, indésirables ou inutiles, et, plus généralement à la régulation de la circulation de ce type d'informations par les autorités habilitées.

Ils seront mieux compris à la lecture de la description et à l'observation des dessins ci-après dans lesquels :

- la figure 1 représente, à titre illustratif, un organigramme des étapes essentielles permettant la mise en oeuvre du procédé d'insertion d'informations de filtrage thématique d'objets accessibles sur un site INTERNET, consultables sur le WEB, conforme à l'objet de la présente invention.

- la figure 2 représente, à titre illustratif, un schéma fonctionnel de mise en oeuvre d'un système d'insertion d'informations de filtrage thématique d'objets accessibles sur un site INTERNET, conforme à l'objet de la présente invention.

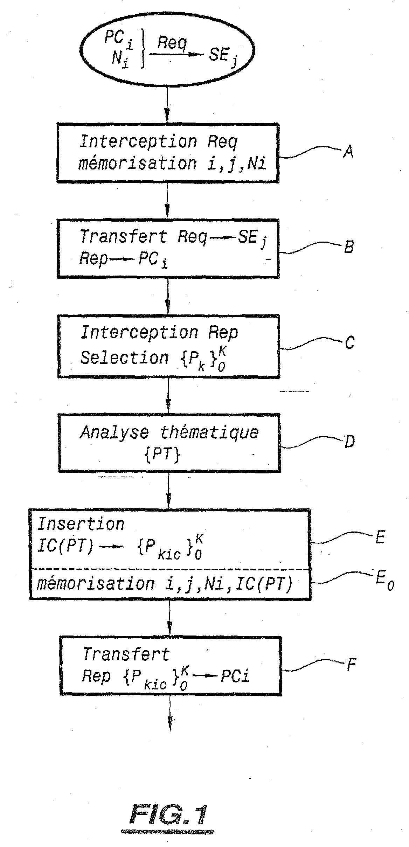

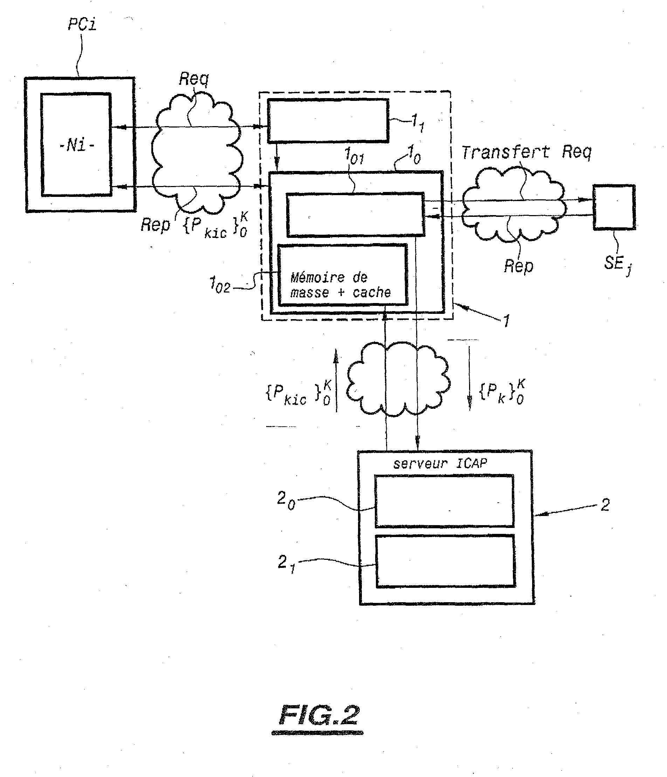

Une description plus détaillée du procédé d'insertion d'informations de filtrage thématique d'objets accessibles sur un site INTERNET et d'un système correspondant sera maintenant donnée en liaison avec la figure 1 et la figure 2.

En référence à la figure 1, on indique que le procédé d'insertion d'informations de filtrage thématique d'objets accessibles sur un site INTERNET, consultables sur le WEB, objet de la présente invention, est relatif à des objets accessibles sur un site INTERNET, consultable sur le WEB, hébergé par un serveur WEB $SE_j$ à partir d'un poste client $PC_i$ muni d'un navigateur $N_i$. Le poste client $PC_i$ et le serveur WEB $SE_j$ sont connectés au réseau IP. La notion d'objet accessible a été définie précédemment dans la description.

Le procédé, objet de la présente invention, est mis en oeuvre dans la situation habituelle selon laquelle toute requête d'accès HTTP au serveur WEB $SE_j$ est émise à partir du poste client $PC_i$ par l'intermédiaire de ce navigateur.

Le procédé objet de l'invention consiste alors au niveau du coeur du réseau, dans une étape A, à intercepter la requête d'accès Req pour mémoriser au moins un paramètre de transaction de cette requête d'accès HTTP au serveur WEB $SE_j$.

Par paramètre de transaction de la requête précitée, on indique qu'il s'agit essentiellement des adresses correspondantes du poste client $PC_i$, du serveur WEB $SE_j$ et d'une référence du type de navigateur utilisé sur ce poste client référence $N_i$. Les adresses correspondantes sont symbolisées par les indices i et j.

Le procédé objet de l'invention consiste ensuite en une étape B à transférer la requête d'accès au serveur WEB $SE_j$ et sur réponse du serveur précité à cette requête d'accès, cette réponse comportant au moins un objet accessible sur ce site, à effectuer une étape C consistant à intercepter la réponse Rep du serveur WEB $SE_j$ à la requête reçue, à vérifier si cet objet est porteur d'informations exploitables pour l'analyse thématique et à sélectionner, au moins un objet support d'informations dans au moins un objet accessible sur le site correspondant.

A l'étape C sur la figure 1, l'opération de sélection consiste à sélectionner une pluralité d'objets tels que par exemple des pages HTML notées :

$$\{Pk\}_0^K$$

cet ensemble de pages HTML désignant la page d'accueil du site par exemple pour k = 0 et toute page successive correspondante. L'opération de sélection consiste à ne retenir un objet que s'il est exploitable ultérieurement par le système d'analyse thématique en fonction de ses propriétés, s'agit-il d'un fichier texte, d'une image à un format connu par exemple.

Chaque objet tel qu'une page HTML comporte notamment une chaîne de caractères, un fichier texte, un fichier image ou autre, le cas échéant une adresse INTERNET reliée par un lien au site accédé par l'intermédiaire de la requête Req.

On comprend, en particulier, que l'opération de sélection précitée permet d'effectuer une sélection dans un ou plusieurs objets correspondants, de chaînes de caractères et/ou images dans une ou plusieurs objets ou pages HTML.

L'étape C est alors suivie d'une étape D consistant à effectuer une analyse thématique de ce ou ces objets accessibles sur ce site pour engendrer un ensemble de paramètres d'analyse thématique, PT.

Les paramètres thématiques précités sont bien entendu caractéristiques de l'objet, du site INTERNET visité et/ou, le cas échéant, de tout site auxiliaire dont l'adresse d'accès est incluse dans une page HTML accédée et directement accessible par l'internaute utilisateur du poste client $PC_i$ et du navigateur $N_i$ associé à ce dernier.

L'étape D est alors suivie d'une étape E consistant à insérer, à partir des paramètres d'analyse thématique précités, une pluralité d'informations de catégorisation de l'information diffusée par le serveur WEB accédé $SE_j$. Les informations de catégorisation sont codées dans l'en-tête HTTP et éventuellement dans la page HTML si l'objet est de ce type, c'est-à-dire dans la page d'accueil ou dans l'ensemble des objets ou pages HTML accessibles.

A l'étape E de la figure 1, l'obtention des informations de catégorisation et l'insertion de ces dernières dans l'en-tête HTTP et/ou lui-même, si les objets sont de type, dans l'ensemble des pages HTML accessibles constitutives de l'objet est notée :

$$\text{IC (PT)} \rightarrow \{P_{kic}\}_0^K$$

Dans la relation symbolique précitée, on indique que IC (PT) désigne l'obtention des informations de catégorisation codées à partir des paramètres d'analyse thématiques PT et $P_{kic}$ désigne tout objet ou page HTML de rang 0 à K dans lequel les informations de catégorisation IC ont été introduites.

L'étape E peut alors être suivie d'une étape F consistant à transférer la réponse Rep du serveur WEB $SE_j$, réponse à la requête d'accès HTTP à ce serveur WEB, cette réponse incluant bien entendu une en-tête et/ou un corps de document contenant les informations de catégorisation au poste client en lieu et place des seules informations contenues dans la réponse initiale.

Cette opération est symbolisée à l'étape F par la relation :

$$\text{Rep } \{P_{kic}\}_0^K \rightarrow PC_i.$$

On comprend ainsi que, au niveau du poste client précité $PC_i$, il est possible à toute personne autorisée d'effectuer un contrôle d'accès aux informations contenues dans la ou les objets accessibles sur le site à partir d'une programmation appropriée et des informations de catégorisation IC contenues dans les entêtes des objets ou document HTML enrichis.

En particulier, le mode opératoire précité apparaît particulièrement souple puisque l'opération à effectuer par la personne responsable du poste client peut ainsi au moyen du seul navigateur $N_i$ programmer, de manière très fine et sélective, l'accessibilité aux objets considérés.

D'une manière plus spécifique, on indique que l'opération d'analyse thématique représentée à l'étape D peut être exécutée à partir de l' URL.

En outre, selon une variante de mise en oeuvre du procédé objet de l'invention, on indique que l'analyse thématique peut également être exécutée à partir du contenu de chaque objet et par une analyse systématique de l'objet considéré, que cet objet comprenne une chaîne de caractères ou texte, une image fixe ou, le cas échéant, une autre adresse INTERNET d'un site INTERNET satellite au site accédé. Dans ce dernier cas, il est possible d'effectuer un accès au site satellite et d'effectuer la mise en oeuvre d'un procédé semblable à celui représenté à la figure 1 pour tout objet informatique support d'informations accessible tel que textes ou images fixes précités contenus dans le site WEB satellite précité.

Les opérations précédentes peuvent bien entendu être mises en oeuvre à partir de tout élément logiciel assurant l'exécution des fonctions précitées.

Les opérations des étapes A, B, C et en particulier D, E, F, peuvent nécessiter des opérations et temps de calcul relativement importants. C'est en particulier le cas lorsqu'un site WEB donné présente une pluralité de sites satellites pour lesquels le contrôle d'accès s'avère, également nécessaire.

Afin de réduire les temps de calcul précités, l'étape F consistant à transférer la réponse du serveur WEB accédé, $SE_j$, à la requête d'accès HTTP à ce serveur, avec une en-tête et/ou un corps de documents contenant les informations de catégorisation au poste client, peut avantageusement être précédée d'une étape de mémorisation des paramètres de transaction de la requête d'accès HTTP à ce serveur WEB et, bien entendu, des informations de catégorisation pour réutilisation de celles-ci ultérieurement.

Un tel mode opératoire est représenté de manière illustrative sur la figure 1 par l'exécution d'une sous-étape $E_0$ de l'étape E consistant, par exemple, à mémoriser non seulement les adresses i,j du poste client et référence du navigateur $N_i$ utilisées par ce dernier, adresse j du serveur accédé mais également des informations de catégorisation IC (PT) pour le serveur d'adresse considérée et pour le poste client et le navigateur d'indice et/ou d'adresse i considérée. Cette opération est réalisée à la sous-étape $E_0$ de l'étape E représentée en figure 1.

On conçoit, en particulier, que la mémorisation de ces informations permet ainsi, lors d'un nouvel accès par le même poste client $PC_i$ au même serveur WEB $SE_j$, de supprimer sensiblement l'étape D d'analyse thématique des objets diffusés par le serveur précité.

Dans ces conditions, la réponse Rep délivrée par le serveur WEB $SE_j$ pour tout nouvel accès à partir du même poste client $PC_i$ est alors soumise, après interception, à l'insertion directe des informations de catégorisation IC (PT) de l'étape E. Ceci permet bien entendu d'économiser du temps de calcul et du temps process.

Une description plus détaillée d'un système d'insertion d'information de filtrage thématique d'objets accessibles sur un site INTERNET conforme à l'objet de la présente invention sera maintenant donnée en liaison avec la figure 2.

D'une manière générale, on indique que le système objet de l'invention est destiné à être implanté au niveau du coeur d'un réseau de type IP par exemple, le coeur de ce réseau reliant en fait tout poste client $PC_i$ muni d'un navigateur $N_i$ à tout serveur WEB $SE_j$ hébergeant un ou plusieurs sites INTERNET, par exemple.

Ainsi que représenté sur la figure 2, on indique que le système objet de l'invention comprend un module 1 d'interception, de contrôle et de redirection de toute requête Req d'accès HTTP à ce serveur WEB $SE_j$ émise à partir du poste client $PC_i$ par l'intermédiaire du navigateur $N_i$ et également de la réponse Rep du serveur WEB $SE_j$ à la requête précitée Req.

En référence au procédé objet de la présente invention décrit en liaison avec la figure 1, on indique que le module 1 d'interception, de contrôle et de redirection permet de sélectionner les objets support d'informations exploitables par le module d'analyse.

En outre, ainsi que représenté en figure 2, le système objet de l'invention comprend un module 2 d'analyse thématique interconnecté au module 1 d'interception, de contrôle et de redirection précédemment cité. Le module 2 d'analyse thématique reçoit au moins un objet informatique support d'informations.

Le module 2 d'analyse thématique délivre au module 1 d'interception, de contrôle et de redirection l'objet enrichi au moyen de paramètres d'analyse thématique. Les objets précités sont enrichis au moyen des paramètres d'analyse thématiques caractéristiques du site INTERNET et d'eux-mêmes, c'est-à-dire, en définitive, des informations de catégorisation IC (PT) précédemment décrites relativement au procédé objet de l'invention.

Le module 1 d'interception, de contrôle et de redirection permet la transmission de la réponse du serveur WEB $SE_j$ comportant les informations de catégorisation issues des paramètres d'analyse thématique au poste client $PC_i$.

Le contrôle d'accès aux informations contenues dans le document HTML accessible sur le site est alors effectué au niveau du poste client ainsi qu'indiqué précédemment relativement au procédé objet de l'invention.

Un mode de mise en oeuvre plus spécifique sera maintenant décrit en à titre d'exemple relativement au système objet de l'invention.

Ainsi que représenté en figure 2, le module 1 d'interception, de contrôle et de redirection de toute requête d'accès HTTP au serveur WEB $SE_j$ et de la réponse Rep du serveur précité à cette requête Req peut comporter au moins un dispositif "proxy-cache" - $1_0$ recevant la requête d'accès et transmettant cette requête d'accès Req au serveur WEB $SE_j$. Le dispositif "proxy-cache" reçoit également la réponse du serveur WEB Rep à la requête d'accès.

On rappelle que la notion de dispositif "proxy-cache" recouvre celle de logiciel mandataire ou de matériel permettant l'exécution d'un tel logiciel et comportant en général une unité de mémorisation.

En particulier, le dispositif "proxy-cache" - $1_0$ comprend, ainsi que représenté en figure 2, un module de sélection $1_{01}$ d'au moins un objet accessible sur le site INTERNET et contenu dans la réponse Rep transmise par le serveur WEB $SE_j$.

Dans un mode de mise en oeuvre simplifié, en référence à la figure 2, on indique que le dispositif "proxy-cache" peut être directement monté en coupure du type pare-feu ("firewall" en langage anglo-saxon) permettant ainsi d'assurer l'interception tant de la requête Req émise par le poste client $PC_i$ que de la réponse Rep émise par le serveur WEB $SE_j$.

Au contraire, dans un mode de mise en oeuvre plus élaboré, en particulier lorsque le système objet de l'invention est installé pour assurer la gestion d'un grand nombre de requêtes Req, le module 1 d'interception, de contrôle et de redirection peut avantageusement comporter en outre un routeur $1_1$ opérant en circuit tampon intermédiaire d'interception et de redirection de la transaction formée par la requête d'accès au serveur WEB vers le dispositif "proxy-cache".

Ce deuxième mode de mise en oeuvre du module 1 d'interception, de contrôle et de redirection permet de traiter un débit plus important de requêtes, en particulier en allégeant la charge de traitement du dispositif "proxy-cache" pour ce qui concerne les fonctions d'interception et de redirection.

Enfin, ainsi que représenté en figure 2 et indépendamment de la mise en oeuvre ou de l'absence de mise en oeuvre d'un routeur $1_1$, le module 1 d'interception, de contrôle et de redirection de toute requête d'accès HTTP au serveur WEB $SE_j$ comporte avantageusement un module $1_{02}$ de mémorisation de tout objet enrichi, c'est-à-dire de l'ensemble

$$\left\{ P_{kic} \right\}_{0,}^{K}$$

au moyen des paramètres d'analyse thématique caractéristiques du site INTERNET visité.

Dans un exemple de mise en oeuvre spécifique non limitatif, on indique que le module de mémorisation $1_{02}$ peut être constitué avantageusement par une mémoire de masse telle qu'un disque dur de forte capacité accessible par une mémoire tampon de type mémoire RAM rapide par exemple.

Enfin, pour la mise en oeuvre du module d'analyse thématique 2, on indique, en référence à la figure 2, que le module précité peut être avantageusement implémenté dans un serveur ICAP, ce type de serveur étant un serveur normalisé pour serveur INTERNET CONTENT ADAPTATION PROTOCOL. Ce type de serveur est capable avec un logiciel adapté de calculer (module $2_0$) le thème associé à un objet contenu dans tout objet ou page HTML en fonction de la page d'entête et du corps du document par analyse textuelle et/ou analyse d'images par exemple. En outre, ce type de serveur en relation avec un moteur de recherche permet avantageusement de tirer partie de toute étiquette de catégorisation déjà positionnée par certains des serveurs WEB hébergeant des sites INTERNET particuliers.

Enfin, ainsi que représenté en outre en figure 2, le module 2 d'analyse thématique comporte également un module $2_1$ d'insertion des paramètres d'analyse thématique et/ou d'information de catégorisation IC (PT) dans le ou les objets tels que les pages HTML accessibles.

A titre d'exemple non limitatif, on indique que le module $2_1$ d'insertion des étiquettes permet une insertion d'étiquettes normalisées en fonction des règles d'enrichissement liées à la norme PICS/RSACi de la thématique de l'objet informatique considéré.

On rappelle que le sigle RSACi, pour "Recreational Software Advisory Council" pour Internet désigne un système de classification des pages Web à partir d'étiquettes décrivant le contenu de celles-ci.

En ce qui concerne l'implantation du système objet de l'invention, on indique que celui-ci peut être implanté soit au niveau et sous la responsabilité de tout fournisseur d'accès au réseau INTERNET, soit, le cas échéant, au niveau et sous la responsabilité de l'opérateur de ce réseau.

Dans les deux cas, l'implantation physique des modules 1 d'interception, de contrôle et de redirection et modules 2 d'analyse thématique peut être réalisée soit par l'intermédiaire d'un réseau local L.A.N. soit, au contraire par l'intermédiaire d'un réseau étendu W.A.N.

On conçoit en particulier que lorsque le système objet de l'invention est implanté au niveau et sous la responsabilité d'une pluralité de fournisseurs d'accès, il est envisageable d'utiliser un seul module d'analyse thématique sous forme de serveur ICAP, la connexion dans cette situation étant alors réalisée par l'intermédiaire d'un réseau étendu W.A.N.

Le procédé et le système objets de la présente invention apparaissent particulièrement avantageux dans la mesure où ils permettent à tout utilisateur d'un poste client et/ou à toute personne ayant en définitive la responsabilité et l'autorité sur l'utilisation de ce poste client d'introduire un contrôle d'accès très simple aux informations diffusées par tout serveur WEB hébergeant un site INTERNET spécifique, les seules opérations de configuration au niveau du poste client correspondant à des opérations de sélection de mots clés, par exemple, dans un menu du navigateur, dont la personne précitée est réputée avoir une bonne maîtrise.

## Revendications

1. Procédé d'insertion d'informations de filtrage thématique d'objets accessibles sur un site INTERNET hébergé par un serveur WEB à partir d'un navigateur d'un poste client connecté au réseau IP, **caractérisé en ce que** celui-ci consiste au moins, pour toute requête d'accès HTTP à ce serveur WEB émise à partir du poste client par l'intermédiaire de ce navigateur, au niveau du coeur de ce réseau à :

    a) - intercepter au niveau du coeur de ce réseau la requête d'accès pour mémoriser au moins un paramètre de transaction de cette requête d'accès HTTP à ce serveur WEB ;
    b) - transférer cette requête d'accès au serveur WEB ; et, sur réponse de ce serveur WEB à cette requête d'accès comportant au moins un objet accessible sur ce site ;
    c) - intercepter cette réponse de ce serveur WEB à cette requête d'accès et sélectionner au moins un objet accessible sur ce site ;
    d) - effectuer une analyse thématique de cet au moins un objet, pour engendrer un ensemble de paramètres d'analyse thématique caractéristique de ce site INTERNET;
    e) - insérer à partir de ces paramètres d'analyse thématique au moins une information de catégorisation codée dans l'en-tête HTTP de la réponse du serveur WEB et/ou dans l'objet luimême ;
    f) - transférer la réponse du serveur WEB à la requête d'accès HTTP à ce serveur WEB avec une en-tête et/ou un corps de document contenant les informations de catégorisation au poste client, ce qui permet, au niveau dudit poste client, d'effectuer un contrôle d'accès aux informations contenues dans le ou les objets accessibles sur ce site.

2. Procédé selon la revendication 1, **caractérisé en ce que** ledit au moins un paramètre de transaction de la requête d'accès HTTP à ce serveur WEB contient, outre les adresses INTERNET du poste client et de ce serveur WEB, un paramètre d'identification du type de navigateur du poste client auteur de la requête d'accès.

3. Procédé selon l'une des revendications 1 ou 2, **caractérisé en ce que** ladite analyse thématique est exécutée à partir de l'URL.

4. Procédé selon l'une des revendications 1 ou 2, **caractérisé en ce que** ladite analyse thématique est exécutée à partir du contenu de chaque objet.

5. Procédé selon l'une des revendications 1 à 4, **caractérisé en ce que** l'étape consistant à transférer la réponse du serveur WEB à la requête d'accès HTTP à ce serveur WEB avec une en-tête et/ou un corps de document contenant les informations de catégorisation au poste client est précédée d'une étape de mémorisation des paramètres de transaction de la requête d'accès HTTP à ce serveur WEB et des informations de catégorisation pour réutilisation ultérieure.

6. Système d'insertion d'informations de filtrage thématique d'objets accessibles sur un site INTERNET hébergé par un serveur WEB à partir d'un navigateur d'un poste client connecté au réseau IP, **caractérisé en ce que** celui-ci comprend au moins, au niveau du coeur de ce réseau :

   - des moyens d'interception, de contrôle et de redirection de toute requête http d'accès à ce serveur WEB émise à partir de ce poste client par l'intermédiaire de ce navigateur et de la réponse de ce serveur WEB à cette requête, lesdits moyens d'interception, de contrôle et de redirection permettant au moins de sélectionner dans ladite réponse de ce serveur WEB au moins un objet accessible sur ce site INTERNET ;
   - des moyens d'analyse thématique interconnectés auxdits moyens d'interception, de contrôle et de redirection et recevant ledit au moins un objet et délivrant auxdits moyens d'interception de contrôle et de redirection cet objet afin de l'enrichir au moyen de paramètres d'analyse thématique caractéristiques de ce site INTERNET, lesdits moyens d'interception, de contrôle et de redirection permettant la transmission de la réponse de ce serveur WEB comportant des informations de catégorisation issues desdits paramètres d'analyse thématique audit poste client, ce qui permet d'effectuer, au niveau de ce poste client, un contrôle d'accès aux informations contenues dans cet objet accessible sur ce site.

7. Système selon la revendication 6, **caractérisé en ce que** lesdits moyens d'interception, de contrôle et de redirection de toute requête d'accès HTTP à ce serveur WEB et de la réponse de ce serveur WEB à cette requête comportent au moins un "proxy-cache" recevant ladite requête d'accès et transmettant cette requête d'accès à ce serveur WEB, ledit "proxy-cache", recevant la réponse de ce serveur WEB à cette requête d'accès et comportant en outre un moyen de sélection d'au moins un objet accessible sur ce site INTERNET.

8. Système selon la revendication 7, **caractérisé en ce que** lesdits moyens d'interception, de contrôle et de redirection comportent en outre un routeur opérant en circuit tampon intermédiaire d'interception et de redirection de la transaction formée par la requête d'accès au serveur WEB vers ledit "proxy-cache".

9. Système selon l'une des revendications 6 à 8, **caractérisé en ce que** lesdits moyens d'interception, de contrôle et de redirection de toute requête d'accès HTTP à ce serveur WEB comportent en outre un moyen de mémorisation de cet objet enrichi au moyen de paramètres d'analyse thématique caractéristique de ce site INTERNET.

10. Système selon l'une des revendications 6 à 9, **caractérisé en ce que** lesdits moyens d'analyse thématique sont implémentés dans un serveur ICAP, comprenant au moins un module d'analyse thématique de cet objet.

11. Système selon la revendication 10, **caractérisé en ce que** lesdits moyens d'analyse thématique comportent en outre un module d'insertion des paramètres d'analyse thématique et/ou d'informations de catégorisation dans cet objet.

12. Module d'interception, de contrôle et de redirection d'une requête http d'accès à des objets accessibles sur un site INTERNET hébergé par un serveur WEB, cette requête étant émise à partir d'un navigateur d'un poste client connecté au réseau IP, et de la réponse de ce serveur WEB à ladite requête, ledit module d'interception, de contrôle et de redirection permettant au moins de sélectionner dans ladite réponse de ce serveur WEB au moins un objet accessible sur ce site INTERNET.

**13.** Module d'interception selon la revendication 12, **caractérisé en ce que** celui-ci comporte au moins un « proxy-cache » recevant ladite requête d'accès et transmettant cette requête d'accès à ce serveur WEB, ledit « proxy-cache » recevant la réponse de ce serveur WEB à cette requête d'accès et comportant en outre un moyen de sélection d'au moins un objet accessible sur ce site INTERNET.

**14.** Module d'interception selon l'une des revendications 12 ou 13, **caractérisé en ce que** celui-ci comporte en outre un moyen de mémorisation dudit objet accessible sur ce site INTERNET, ledit objet étant un objet enrichi au moyen de paramètres d'analyse thématique caractéristiques de ce site INTERNET.

**15.** Module d'analyse thématique recevant un objet informatique support d'information, cet objet étant accessible sur un site INTERNET hébergé par un serveur WEB, et destiné à un poste client connecté au réseau IP sur requête émise à partir d'un navigateur de ce poste client, ledit module d'analyse thématique délivrant ledit objet accessible et des paramètres d'analyse thématique caractéristiques de ce site INTERNET.

**16.** Module d'analyse thématique selon la revendication 15, **caractérisé en ce que** celui-ci est implémenté dans un serveur ICAP, comprenant au moins un module logiciel d'analyse thématique de cet objet.

**17.** Module d'analyse thématique selon la revendication 16, **caractérisé en ce qu'**il comporte en outre un module d'insertion desdits paramètres d'analyse thématique et/ou d'informations de catégorisation dans ledit objet.

$$\left.\begin{array}{c} PC_i \\ N_i \end{array}\right\} \xrightarrow{\;Req\;} SE_j$$

Interception Req
mémorisation $i,j,Ni$ —— A

Transfert $Req \rightarrow SE_j$
$Rep \rightarrow PC_i$ —— B

Interception Rep
Selection $\{P_k\}_0^K$ —— C

Analyse thématique
$\{PT\}$ —— D

Insertion
$IC(PT) \rightarrow \{P_{kic}\}_0^K$ —— E
—————————————
mémorisation $i,j,Ni,IC(PT)$ —— $E_0$

Transfert
$Rep\ \{P_{kic}\}_0^K \rightarrow PCi$ —— F

_FIG.1_

**FIG.2**

Office européen
des brevets

**RAPPORT DE RECHERCHE EUROPEENNE**

Numéro de la demande

EP 04 29 2069

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | FR 2 823 044 A (FRANCE TELECOM) 4 octobre 2002 (2002-10-04) | 1,3,4, 6-10 | H04L29/08 |
| A | * page 2, ligne 1 - page 3, ligne 7 * ----- | 2,5,11 | |
| A | US 2002/156836 A1 (RUBINO MICHAEL ET AL) 24 octobre 2002 (2002-10-24) * le document en entier * ----- | 1,2 | |
| A | "evaluWEB" EVALUWEB, [Online] août 1998 (1998-08), XP002282730 Extrait de l'Internet: URL:http://www.research.att.com/projects/tech4kids/EvaluWEB.html> [extrait le 2004-05-28] * le document en entier * ----- | 1-11 | |
| A | CRANOR L F ET AL: "A Catalog of Tools that Support Parents' Ability to Choose Online Content Appropriate for their Children" TECHNOLGY INVENTORY, novembre 1997 (1997-11), XP002184382 Extrait de l'Internet: URL:http://www.research.att.com> [extrait le 2001-11-29] * page 1, dernier alinéa - page 2, alinéa 2 * * page 5, alinéa 14 * ----- | 1-11 | DOMAINES TECHNIQUES RECHERCHES (Int.Cl.7) H04L G06F |
| A | US 2003/126267 A1 (BRODSKY TOMAS ET AL) 3 juillet 2003 (2003-07-03) * page 2, colonne 1, ligne 5-13, alinéa 13 * * page 2, colonne 1, ligne 1,2, alinéa 13 * * alinéa [0020] * * phrases 3,4, alinéa 6 * ----- | 1-11 | |

Le présent rapport a été établi pour toutes les revendications

| Lieu de la recherche | Date d'achèvement de la recherche | Examinateur |
|---|---|---|
| La Haye | 10 novembre 2004 | Paven, A |

EPO FORM 1503 03.82 (P04C02)

**EP 1 515 522 A1**

**ANNEXE AU RAPPORT DE RECHERCHE EUROPEENNE
RELATIF A LA DEMANDE DE BREVET EUROPEEN NO.**

EP 04 29 2069

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

10-11-2004

| Document brevet cité au rapport de recherche | | Date de publication | Membre(s) de la famille de brevet(s) | | Date de publication |
|---|---|---|---|---|---|
| FR 2823044 | A | 04-10-2002 | FR 2823044 A1<br>CA 2443221 A1<br>EP 1381978 A1<br>WO 02080024 A1 | | 04-10-2002<br>10-10-2002<br>21-01-2004<br>10-10-2002 |
| US 2002156836 | A1 | 24-10-2002 | AUCUN | | |
| US 2003126267 | A1 | 03-07-2003 | WO 03060757 A2 | | 24-07-2003 |

EPO FORM P0460

Pour tout renseignement concernant cette annexe : voir Journal Officiel de l'Office européen des brevets, No.12/82

12